# EUROPEAN PATENT SPECIFICATION

(11) **EP 3 534 697 B1**
(45) Date of publication and mention of the grant of the patent: **02.10.2024**
(21) Application number: 17792217.6
(22) Date of filing: 25.10.2017
(51) Int. Cl.: A01K 31/00, A01K 31/02, A01K 31/07, A01K 45/00

(54) **POULTRY CONTAINER COVER, POULTRY CONTAINER, AND POULTRY CONTAINER ASSEMBLY FOR HOLDING LIVE POULTRY**
ABDECKUNG FÜR GEFLÜGELBEHÄLTER, GEFLÜGELBEHÄLTER UND GEFLÜGELBEHÄLTERANORDNUNG ZUR AUFNAHME VON LEBENDEM GEFLÜGEL
COUVERCLE DE CONTENANT POUR VOLAILLE, CONTENANT POUR VOLAILLE ET ENSEMBLE DE CONTENANTS POUR VOLAILLE POUR CONTENIR DES VOLAILLES VIVANTES

(30) Priority: 02.11.2016 NL 2017706
(43) Date of publication of application: 11.09.2019
(73) Proprietor: Marel Stork Poultry Processing B.V., 5831 AV Boxmeer (NL)
(72) Inventor: VERGELDT, Jeroen, 5855 AT Well (NL); KROOT, Marcus Marinus Gerardus, 5845 EZ Sint Anthonis (NL); CLAESSENS, Roger Pierre Hubertus Maria, 6581 EK Maiden (NL)
(74) Representative: Patentwerk B.V.
(86) International application number: PCT/NL2017/050697
(87) International publication number: WO 2018/084700

(56) References cited:
- FR-A- 1 589 543
- GB-A- 2 353 253
- US-A- 4 547 014
- US-A- 5 102 182
- US-A- 5 938 270
- US-A1- 2009 288 613
- US-A1- 2013 026 166
- US-A1- 2016 114 941
- US-A1- 2016 130 836
- US-B1- 8 857 887

## Description

The present invention relates to a poultry container cover to screen off a poultry container for holding live poultry according to claim 1, to a poultry container for holding live poultry comprising such a poultry container cover, as well as to a poultry container assembly for holding live poultry comprising a stack of poultry containers with a poultry container including such a poultry container cover placed on top.

During storage and transport of poultry (for instance on a poultry farm, from a poultry farm to another poultry farm, on a transport vehicle, from a poultry farm to a slaughterhouse or on a slaughterhouse) the poultry is usually held or transported alive in poultry holders. One such poultry holder is normally designed to hold plural animals in the order of magnitude of a dozen or several dozen of animals. These poultry holders are also referred to as "pallets", "crates", "cages" or "containers". For easy logistics a plurality of such poultry holders may be combined in a shared support structure that makes it possible to stack the poultry holders compact and to displace a support structure with the several holders as a single unit. A support structure may consist of a steel frame in which a number of poultry holders are held in stacked (multilayer) manner and from which the poultry holders can be wholly or partially removed, and can thus for instance be embodied such that they can slide optionally fully into and out of the support structure, similarly to drawers in a chest of drawers. Another possibility is to integrate the poultry containers with the support structure so that this latter comprises compartments provided with individually controllable closing means.

As an alternative also plural individual poultry containers may be used that may be stacked onto each other to be combined to a poultry container assembly of a desired height. In practise use may be made of poultry containers assemblies with stacks of for instance four, five or six poultry containers stacked onto each other. Each poultry container containing live poultry of a poultry container assembly is covered by the poultry container placed on top of that poultry container except for the upper most poultry container of the poultry container assembly.

US patent 4,547,014 (D6) discloses an accordion-like folding cover assembly for open truck beds having a pair of track-members that are attached to the side walls of the truck bed and an articulated hingely multi-panelled rigid cover is guidable connected to the track members. A flexible cover is overlying and attached to the multi-panelled rigid cover to make the multi-panelled rigid cover water impervious and to improve the aesthetic appearance of the cover assembly. The cover is also provided with specific defined attachments for retaining and locking the cover in various positions to the track-members.

The US patent application 2016/0114941 discloses a cover for covering open top food containers. The figures show that the cover has an open top closable by a "fan or accordion" type lid formed of a plurality of slats that are sequentially pivotally attached. Parallel side supports mounted on the side walls of the cover provide a track for the lid to slide on. Around the circumference of the open top the cover is provided with a ledge that keeps the lid within the side walls of the cover. To lock the lid in its closed position a locking structure in the form of magnets provided on the lid and the side wall is applied.

The United States patent application US 2013/0026166 discloses a lid for a waste container that is pivotable relative to the waste container such that it swings open upon inversion of the container for emptying. The lid further comprises a roller shutter that covers an opening in the lid and may be opened to provide access to the waste container for waste to be placed inside the container. In an embodiment of the lid the roller shutter is replaced by a harmonica-type shutter formed with rigid slats interconnected by hinges. The ends of the hinges are received in tracks formed by members of the frame of the lid such that the shutter is retained in the frame.

It is an object of the present invention to provide an efficient and effective poultry container cover for a poultry container for holding live poultry to shield off a top poultry container, as well as a poultry container including such a cover. A further object of the present invention is to support the flexibility in the storage and transportation of live poultry.

The invention provides for this purpose a cover for a poultry container for holding live poultry according to claim 1.

Such a poultry container cover enables controlled opening and closure of the poultry container cover from two opposite sides combined with a simple, solid and compact construction of the closure. By moving the longitudinal supports along the guides the flexible cover sheet may be brought in a position wherein the flexible cover sheet substantially closes off the space (surface area) between the guides, or - in other words - prevents poultry to pass the space between the guides. In the situation a poultry container is at least partially filled with poultry by closing the cover the uncontrolled removal of poultry from the poultry container may be prevented by closing the poultry container cover according to the present invention. Thus for instance during transport of the poultry container the cover will be closed, and at the location where the poultry is to be processed further the cover may be opened (or at a location where poultry is to be loaded into a poultry container) by moving the longitudinal supports more towards each other. By moving the longitudinal supports towards each other the flexible cover sheet will also be moved such that is covers a smaller part of the space (surface area) between the guides. Dependent on the relative movement of the longitudinal supports a smaller or larger part of the space between the guides will not be covered anymore by the flexible cover sheet and thus a poultry container provided with the poultry container cover may be filled with, or discharged of, poultry. Various process wherein the poultry container is used (e.g. loading, transporting, unloading, cleaning, storage and so on) may require different orientation of the longitudinal supports relative to the guides. The poultry container cover has the advantage that it enables opening the cover from two opposite sides and that it enables opening of the poultry container cover to a large extend, that is to say for far more than 50% of the area that may be screened by the poultry container cover. As to assist the operator in simple and correct positioning of the longitudinal supports onto the guides the parallel guides are provided with preferred holding locations for preferred positioning of the longitudinal supports onto the guides. This implies that there is a "feedback" (e.g. a tactile barrier) for an operator (or a feed back to a mechanical system) when moving one or more longitudinal supports to a desired location onto the guides. For instance preferred holding locations for "fully opened", "intermediate opened", and/or "fully closed" may be provided to simplify the correct positioning of the longitudinal supports, and thus of the flexible cover sheet. A further advantage of the poultry container cover is that the longitudinal supports are slideable and that the cover thus may be opened and closed without the requirement of substantial space above the poultry container cover (as the opening and/or closing takes place more or less in a single plane).

The preferred holding locations of the guides of the poultry container cover according to the present invention may be defined with relief on the guides, like for instance ridges, bumps, chamfers and/or bevels. As an alternative - or additionally to the relief on the guides - the preferred holding locations of the guides may be defined with magnetic force, like for instance co-operating magnetic elements in guides and the longitudinal supports. The advantage of defined holding locations of the longitudinal supports on the guides enables simpler use of the cover. For instance in opening or closing a preferred position of one or more of the longitudinal supports guarantees that the intended use may be realised. In closing the poultry container cover it is preferred to be sure that the longitudinal supports are in the "closed position", which is a situation wherein complete space (surface area) between the guides is blocked for the passage of poultry. In this situation the longitudinal supports have to be spreaded out over the length of the guides. In opening the poultry container cover (from one side or from two opposite sides) the longitudinal supports have to be brought in a closers configuration to be sure the poultry container cover is opened enough to provide satisfactory access to the interior of a poultry container. The provision of defined holding locations ensures more user-friendliness and less chance of problems during use of the poultry container covers.

It is also possible that one or more longitudinal supports are not moveable relative to the guides, for instance a central longitudinal support may be connected fixed (immoveable) to the guides so to provide a central fixed position enabling for instance the other longitudinal supports to be moved to an (dual) opened position wherein all the longitudinal supports from two opposite sides are displaced (shifted) towards the fixed central longitudinal support.

The flexible cover sheet may be provided with openings, like for instance a (synthetic) sheet with apertures, or a net like a wire mesh structure. The advantage of openings in the cover sheet is that the cover sheet enables ventilation of live poultry held by a poultry container that is covered with such a poultry container cover.

Furthermore the guides may be provided with couplings for connecting the guides onto a poultry container. Such coupling enable the easy assembly (and disassembly) of a poultry container and the poultry container cover.

The invention also provides a poultry container for holding live poultry, comprising: a bottom wall, four side walls protruding from the bottom wall and a cover for a poultry container according to the present invention, which poultry container cover is connected to the side walls at distance from the bottom wall. With the poultry container cover the poultry container may be screen off but also may be made accessible. The preferred holding locations of the poultry container cover are located on the parallel guides at least on positions adjoining two opposite side walls of the poultry container and at one or more positions centrally between two opposite walls. This enables longitudinal supports to be located close to the opposite side walls and thus to make the cover sheet to prevent poultry to leave or enter the poultry container in the situation the poultry container cover is closed. The poultry container cover may be opened from one side or from two opposite sides, dependent which longitudinal supports are moveable connected to the guides. The poultry container including the poultry container cover may be used individually for the logistic handling of poultry but normally such poultry container will be used as the top poultry container of a stack of plural poultry containers, which will be explained in more detail later.

The poultry container may be provided with a door, which door is formed by a section of one of the side walls and a, with the side wall section connected, section of the bottom wall, which door is moveable connected with the rest of the poultry container such that the door is displaceable between a position wherein the door fits the rest of the poultry container and a position wherein the door leaves an opening in the side wall and the bottom for the passage of poultry. In the situation wherein the poultry container cover is at least partially opened the door is accessible and may be used to get access to a location underneath the poultry container. The door may be centrally located in the side wall wherein the door is installed to keep the guides away from the working area of the door. To prevent further undesired interaction of the poultry container cover and the door the door may be slideable connected with the rest of the bottom wall.

The invention also provides a poultry container assembly for holding live poultry, comprising plural stacked poultry containers including a poultry container with a poultry container cover according to the present invention placed on top of the stack of poultry containers. The poultry containers may be stacked by placing a poultry container on top of an underlying poultry container such that the underlying poultry container is closed by the poultry container that is placed on top of it. The assembly may also include a poultry container base that differs in construction of the poultry containers as it has to fulfil different functions than the poultry containers stacked on top of it. Preferably the poultry container base is for instance also provided of sockets for housing the fork of a fork-lift truck.

As mentioned before the top poultry container includes the poultry container cover according to the invention to shield off the top poultry container. In practise often use will be made of a poultry container base, on top of which subsequently four (or five) poultry containers are placed with the top poultry containers including the poultry container cover. However also larger or smaller assemblies may be applied, as desired including or excluding a poultry container base. Variation in the height/capacity of the assembly enables to adapt the poultry container assembly to actual circumstances. It is even possible to put together an assembly of a poultry container base on which base are one or more poultry containers stacked where upon again a poultry container base is stacked on top of which one or more subsequent poultry containers may be stacked of which the upper most poultry container including the poultry container cover. For instance a practical stack-size for loading or unloading may be a base with four poultry containers while a transport facility (e.g. a truck) may allow to pile up two of such "five layered" assembles to result in a "ten layered" transport assembly configuration wherein the fifth poultry container element includes a poultry container cover and the tenth poultry container element includes a poultry container cover. Such configuration enable de-stacking of the ten layered assembly to two five layered assemblies, wherein both the top poultry containers of the two five layered assemblies are provided with a covered top poultry container. To provide this functionality the poultry container cover may be located below the upper side of the side walls protruding from the bottom wall of the poultry container, so that stacking a poultry container (or a poultry container basis) on a poultry container including a poultry container cover is possible without substantial weight being exerted on the poultry container cover.

The invention will be further elucidated herein below on the basis of the non-limitative exemplary embodiments shown in the following figures. Herein:
figure 1 shows a perspective schematic view of a poultry container cover according to the present invention in a closed position;
figure 2A shows a cross-section of a guide and a part of a longitudinal support; figure 2B shows a perspective schematic view of the outer end of a longitudinal support;
figure 3 shows a perspective schematic view of the poultry container cover as shown in figure 1 in a partially opened position;
figure 4 shows a perspective schematic view of the poultry container cover as shown in figures 1 and 3 in a fully opened position;
figure 5A shows a perspective schematic view of an alternative embodiment of the outer end of a longitudinal support and a magnet to be place in this outer end of the longitudinal support;
figure 5B shows a perspective view on an end part of a guide and a strip holding magnets to be placed into the guide;
figure 6 shows a perspective view on a part of a longitudinal support and a flexible cover sheet clamped onto the longitudinal support;
figure 7 shows a top view on an alternative embodiment of a flexible cover sheet; figure 8 shows a perspective schematic view of a poultry container including a closed cover according to the present invention; and
figure 9 shows a perspective schematic view of a poultry container assembly including a top poultry container with an opened cover according to the present invention.

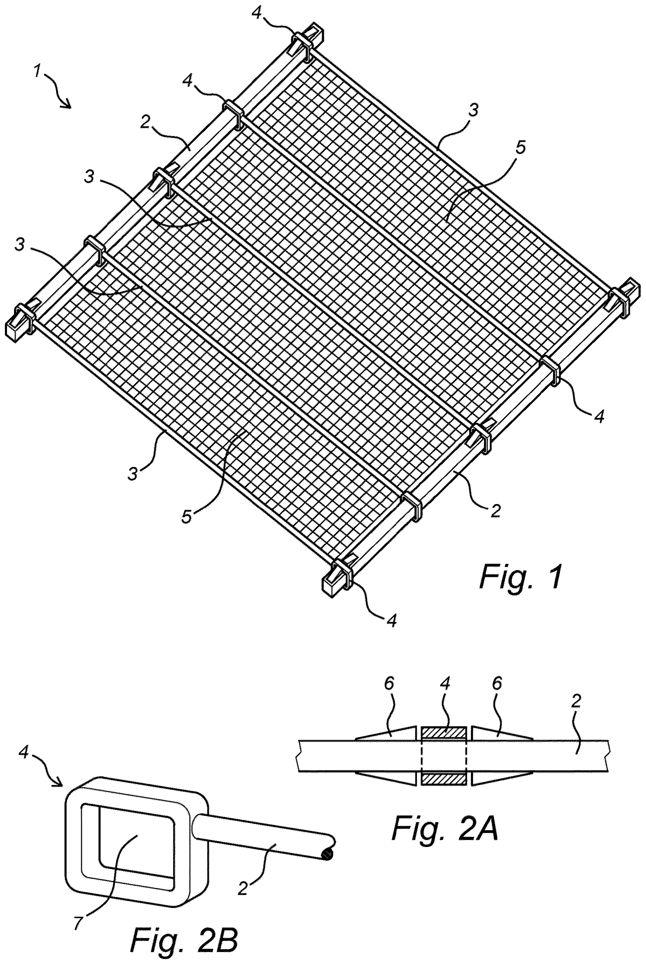

Figure 1 shows a poultry container cover 1 with two parallel guides 2, here embodied as bars, along which guides 2 longitudinal supports 3 are slideable. The longitudinal supports 3 comprise on opposite sides two brackets 4 that enclose the guides 2. The longitudinal supports 3 stretch a flexible cover sheet 5, here embodied as a net. As is clearly depicted in figure 2A - but also shown in figure 1 - the guide 2 has bevelled notches 6 that define preferred positions for a brackets 4 that are part of a longitudinal support 3. A bracket 4 is shown in more detail in figure 2B. To prevent the bracket 4 coming loose from the guide 2 the bracket 4 has a closed opening 7 to encircle the guide 2.

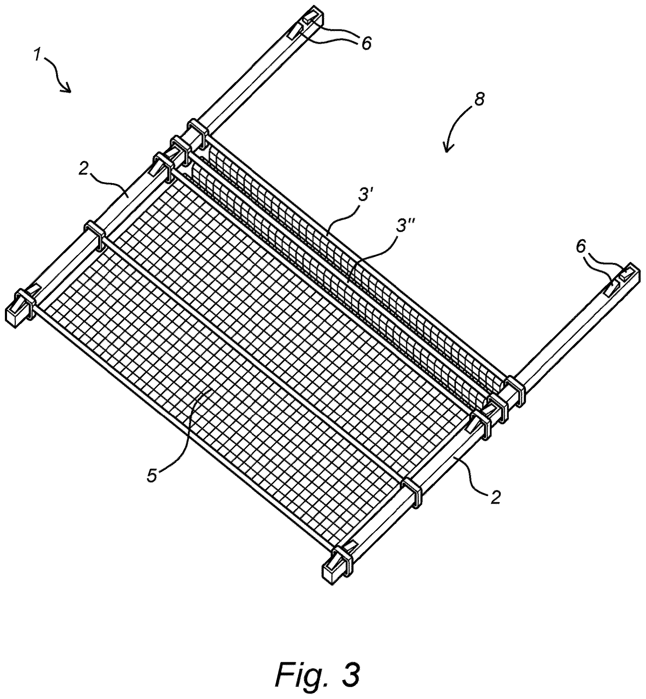

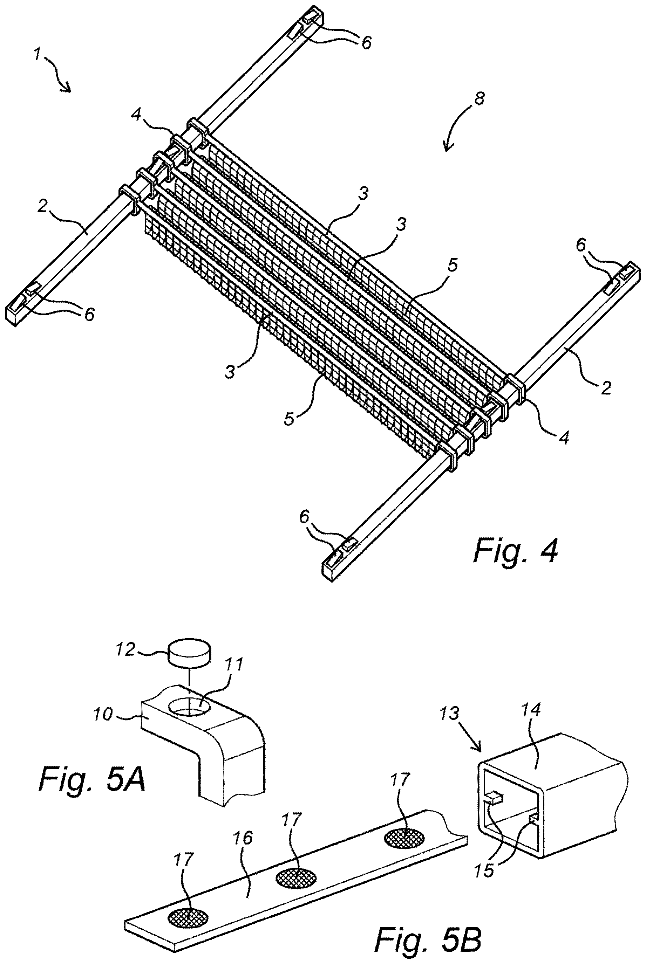

In figure 3 the poultry container cover 1 as shown in figure 1 is depicted again, however now in a half opened position. Two of the longitudinal supports 3' and 3" are shifted towards the middle of the parallel guides 2 thus creating a space 8 between the guides 2 that is not covered anymore by the cover sheet 5. The poultry container cover 1 in this half opened position provides access to a poultry container when attached to such poultry container. In figure 4 the poultry container cover 1 as shown in figures 1 and 3 is shown again but now in a fully opened position wherein all the longitudinal supports 3 are shifted towards the middle of the guides 2. As an alternative the poultry container cover 1 may also be fully opened by moving the longitudinal supports 3 together somewhere else on the guides 2 (thus not in the middle of the guides 2 but for instance on one of the two opposite sides of the guides 2). The flexible cover sheet 5 is in this position of the longitudinal supports 3 not covering the opening (space) between the two guides 2 anymore.

In figure 5A a part of a bracket 10 from a longitudinal support is shown including an aperture 11 for holding a magnet 12. Such bracket 10 is preferably to be used in combination with a type of guide 13 as shown in figure 5B. This guide 13 is formed by a profile section 14 that has an internal holding structure 15 for a strip 16 holding several magnets 17. The cooperation between the magnet 12 in the bracket 10 with the magnets 17 in the guide 13 define preferred positions of the bracket 10 of a longitudinal support 3 on the guide 13. In the embodiment according to the figures 5A and 5B the bevelled notches 6 as shown in the figures 1, 2A, 3 and 4 are thus superfluous.

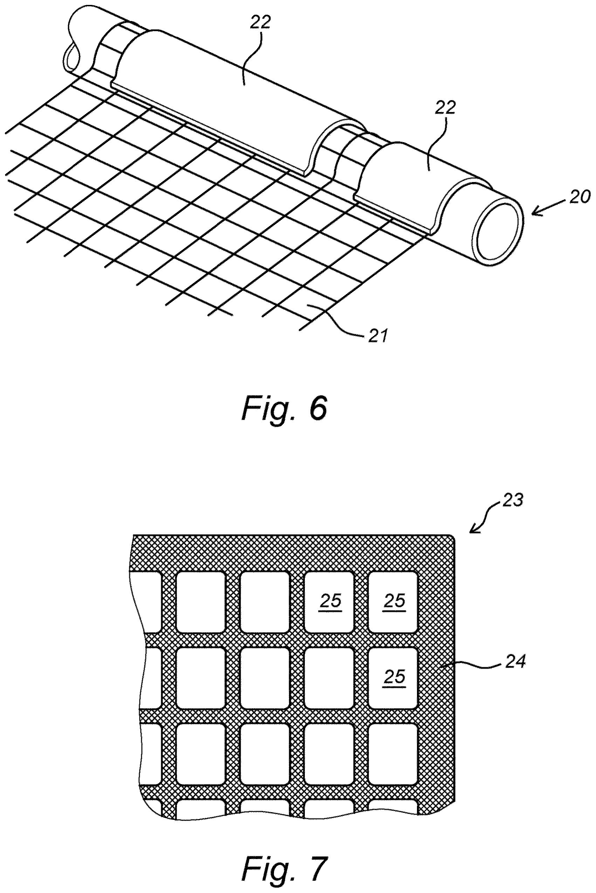

Figure 6 shows a perspective view on a part of a longitudinal support 20 carrying a flexible cover sheet (net) 21. The cover sheet 21 is attached to the longitudinal support 20 using clamping elements 22. In figure 7 a top view on an alternative cover sheet 23. Here the cover sheet 23 is a synthetic film 24 wherein spaces 25 are left open.

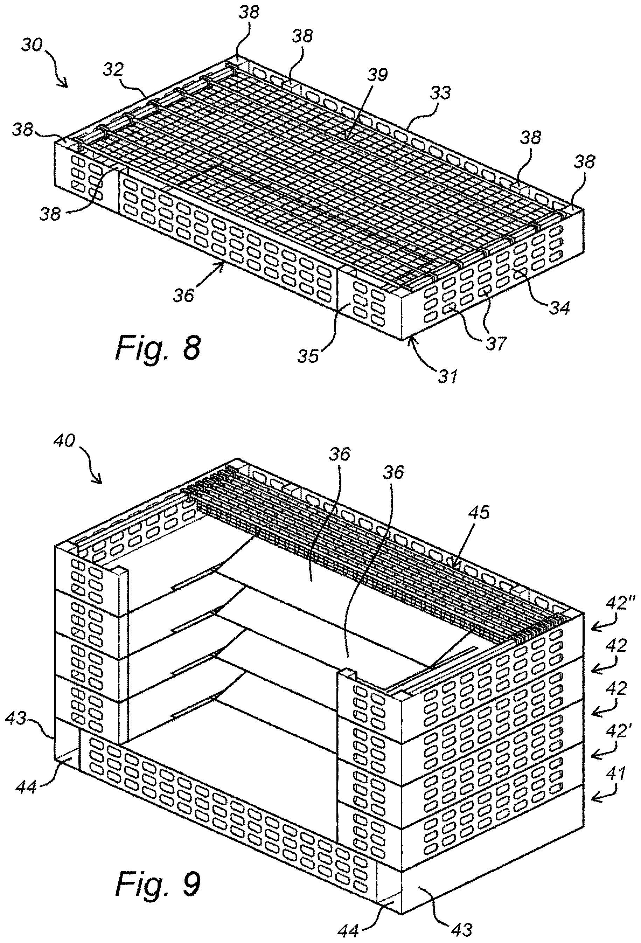

Figure 8 shows a poultry container 30 for holding live poultry, with a bottom wall 31 and four side walls 32 - 35 protruding from the bottom wall 31. A door 36 is formed by a section of one of the side walls 35 and a section of the bottom wall 31. The door 36 is displaceable between a position wherein the door 36 fits the rest of the poultry container 30, which is the situation shown in figure 8, and a position wherein the door 36 leaves an opening in the side wall 35 and the bottom wall 31 for the passage of poultry (this situation is shown in figure 9). The side walls 32 - 35 of the poultry container 30 are provided with apertures 37 for aeration/ventilation. Furthermore the poultry container 30 has support columns 38 for carrying the weight of structures that may be stacked onto the poultry container 30. The poultry container 30 is also proved with a poultry container cover 39, here shown in the closed position. For a more detailed description of the poultry container cover 39 reference is made to the previous figures. The poultry container cover 39 may be fully integrated with the poultry container 30, e.g. by welding the guides to the poultry container 30, but as an alternative the poultry container cover 39 may also be releasable attached to the poultry container 30. Releasable attachments are for instance clamping attachments, form fitting attachments, snap fitting attachments, bolted attachments, combinations of such attachments and/or alternative releasable attachments.

Figure 9 shows a perspective schematic view of a poultry container assembly 40 wherein on a poultry container base 41 subsequently four poultry containers 42 are stacked. The poultry container base 41 holds two parallel sockets 43 wherein openings 44 are provided for handling the poultry container base 41. The doors 36 (see also figure 8) of all the poultry containers 42 are in the opened position, for instance to enable the loading of the poultry container base 41 with live poultry. After the poultry container base 41 is loaded the door 36 of the lower poultry container 42' may be closed (to the position as depicted in figure 8). Now the lower poultry container 42' may be loaded and this procedure may be repeated until all the poultry containers 42 are loaded. After loading all the poultry containers 42, including the top poultry container 42" a poultry container cover 45 that is part of the top poultry container 42" may be closed to hold the live poultry loaded in the top poultry container 42".

The scope of protection of the current invention is defined by the appended claims.

## Claims

1. Cover (1) for a poultry container (30) for holding live poultry, comprising:
- two substantially parallel guides (2);
- plural longitudinal supports (3), on opposite sides moveable connected to the guides (2);
- a flexible cover sheet (5), connected to the longitudinal supports (3); and
wherein the parallel guides (2) are provided with preferred holding locations (6) for preferred positioning of the longitudinal supports (3) onto the guides (2)
**characterised in that** the longitudinal supports (3) are moveable from two opposite sides allowing the cover (1) to open from both ends of the first and second guides (2).

2. Poultry container cover (1) according to claim 1, **characterised in that** the preferred holding locations (6) of the substantially parallel guides (2) are defined with relief on the guides (2).

3. Poultry container cover (1) according to claim 1 or 2, **characterised in that** the preferred holding locations (6) of the substantially parallel guides (2) are defined with magnetic force.

4. Poultry container cover (1) according to one of the preceding claims,
**characterised in that** the flexible cover sheet (5) is provided with openings (25).

5. Poultry container cover (1) according to one of the preceding claims,
**characterised in that** the flexible cover sheet (5) is a net.

6. Poultry container cover (1) according to one of the preceding claims,
**characterised in that** at least one longitudinal support (3) is connected fixed to the guides (2).

7. Poultry container cover (1) according to one of the preceding claims,
**characterised in that** guides (2) are provided with couplings for connecting the guides (2) onto a poultry container (30).

8. Poultry container (30) for holding live poultry, comprising: a bottom wall, four side walls (32, 33, 34, 35) protruding from the bottom wall (31) and a cover (1) for a poultry container (30) according to one of the preceding claims, which poultry container cover (1) is connected to the side walls (32, 33, 34, 35) at distance from the bottom wall (31).

9. Poultry container (30) for holding live poultry according to claim 8, **characterised in that** the preferred holding locations (6) are located on the parallel guides (2) at least on positions adjoining two opposite side walls (32, 33, 34, 35) of the poultry container (30) and at one or more positions centrally between two opposite walls (32, 33, 34, 35).

10. Poultry container (30) for holding live poultry according to claim 8 or 9,
**characterised in that** the poultry container (30) is provided with a door (36), which door (36) is formed by a section of one of the side walls (35) and a, with the side wall section connected, section of the bottom wall, which door (36) is moveable connected with the rest of the poultry container (30) such that the door (36) is displaceable between a position wherein the door (36) fits the rest of the poultry container (30) and a position wherein the door (36) leaves an opening in the side wall (35) and the bottom (31) for the passage of poultry.

11. Poultry container (30) according to any of the claims 8 - 10, **characterised in that** the door (36) is centrally located in the side wall (35) wherein the door (36) is installed.

12. Poultry container (30) according to any of the claims 8 - 11, **characterised in that** the door (36) is slideable connected with the rest of the bottom wall (31).

13. Poultry container assembly (40) for holding live poultry, comprising plural stacked poultry containers (42) including a poultry container (30) according to any of the claims 8-12 placed on top of the stack of poultry containers (42).

14. Poultry container assembly (40) according to claim 13, **characterised in that** the poultry container assembly (40) includes a poultry container base (41).

## Patentansprüche

1. Deckel (1) für einen Geflügelbehälter (30) zum Aufnehmen von lebendem Geflügel, umfassend:
- zwei im Wesentlichen parallele Führungen (2);
- mehrere Längsträger (3), die auf entgegengesetzten Seiten bewegbar mit den Führungen (2) verbunden sind;
- ein flexibles Deckblatt (5), das mit den Längsträgern (3) verbunden ist; und
wobei die parallelen Führungen (2) mit bevorzugten Haltestellen (6) zum bevorzugten Positionieren der Längsträger (3) auf den Führungen (2) versehen sind,
**dadurch gekennzeichnet, dass** die Längsträger (3) von zwei entgegengesetzten Seiten bewegbar sind, wodurch es dem Deckel (1) erlaubt wird, sich von beiden Enden der ersten und zweiten Führung (2) zu öffnen.

2. Geflügelbehälterdeckel (1) nach Anspruch 1, **dadurch gekennzeichnet, dass** die bevorzugten Haltestellen (6) der im Wesentlichen parallelen Führungen (2) mit Relief an den Führungen (2) definiert sind.

3. Geflügelbehälterdeckel (1) nach Anspruch 1 oder 2, **dadurch gekennzeichnet, dass** die bevorzugten Haltestellen (6) der im Wesentlichen parallelen Führungen (2) mit Magnetkraft definiert sind.

4. Geflügelbehälterdeckel (1) nach einem der vorstehenden Ansprüche,
**dadurch gekennzeichnet, dass** das flexible Deckblatt (5) mit Öffnungen (25) versehen ist.

5. Geflügelbehälterdeckel (1) nach einem der vorstehenden Ansprüche,
**dadurch gekennzeichnet, dass** das flexible Deckblatt (5) ein Netz ist.

6. Geflügelbehälterdeckel (1) nach einem der vorstehenden Ansprüche,
**dadurch gekennzeichnet, dass** mindestens ein Längsträger (3) fest mit den Führungen (2) verbunden ist.

7. Geflügelbehälterdeckel (1) nach einem der vorstehenden Ansprüche,
**dadurch gekennzeichnet, dass** Führungen (2) mit Kopplungen zum Verbinden der Führungen (2) mit einem Geflügelbehälter (30) versehen sind.

8. Geflügelbehälter (30) zum Aufnehmen von lebendem Geflügel, umfassend: eine Bodenwand, vier von der Bodenwand (31) vorragende Seitenwände (32, 33, 34, 35) und einen Deckel (1) für einen Geflügelbehälter (30) nach einem der vorstehenden Ansprüche, wobei der Geflügelbehälterdeckel (1) mit Abstand von der Bodenwand (31) mit den Seitenwänden (32, 33, 34, 35) verbunden ist.

9. Geflügelbehälter (30) zum Aufnehmen von lebendem Geflügel nach Anspruch 8, **dadurch gekennzeichnet, dass** die bevorzugten Aufnahmestellen (6) an den parallelen Führungen (2) zumindest an Positionen, die an zwei entgegengesetzte Seitenwände (32, 33, 34, 35) des Geflügelbehälters (30) angrenzen, und an einer oder mehreren Positionen mittig zwischen zwei entgegengesetzten Wänden (32, 33, 34, 35) liegen.

10. Geflügelbehälter (30) zum Aufnehmen von lebendem Geflügel nach Anspruch 8 oder 9, **dadurch gekennzeichnet, dass** der Geflügelbehälter (30) mit einer Tür (36) versehen ist, wobei die Tür (36) durch einen Abschnitt einer der Seitenwände (35) und einen mit dem Seitenwandabschnitt verbundenen Abschnitt der Bodenwand gebildet ist, wobei die Tür (36) bewegbar mit dem Rest des Geflügelbehälters (30) derart verbunden ist, dass die Tür (36) zwischen einer Position, in der die Tür (36) zum Rest des Geflügelbehälters (30) passt, und einer Position, in der die Tür (36) eine Öffnung in der Seitenwand (35) und dem Boden (31) für den Durchgang von Geflügel belässt, verschiebbar ist.

11. Geflügelbehälter (30) nach einem der Ansprüche 8 - 10, **dadurch gekennzeichnet, dass** die Tür (36) mittig in der Seitenwand (35) liegt, in der die Tür (36) installiert ist.

12. Geflügelbehälter (30) nach einem der Ansprüche 8 - 11, **dadurch gekennzeichnet, dass** die Tür (36) verschiebbar mit dem Rest der Bodenwand (31) verbunden ist.

13. Geflügelbehälteranordnung (40) zum Aufnehmen von lebendem Geflügel, die mehrere gestapelte Geflügelbehälter (42) umfasst, einschließlich eines Geflügelbehälters (30) nach einem der Ansprüche 8 - 12, der oben auf dem Stapel von Geflügelbehältern (42) platziert ist.

14. Geflügelbehälteranordnung (40) nach Anspruch 13, **dadurch gekennzeichnet, dass** die Geflügelbehälteranordnung (40) eine Geflügelbehälterbasis (41) beinhaltet.

## Revendications

1. Couvercle (1) pour un contenant de volaille (30) pour contenir de la volaille vivante, comprenant :
- deux guides sensiblement parallèles (2) ;
- plusieurs supports longitudinaux (3), sur des côtés opposés mobiles reliés aux guides (2) ;
- une feuille de couverture flexible (5), reliée aux supports longitudinaux (3) ; et
dans lequel les guides parallèles (2) sont pourvus d'emplacements de maintien préférés (6) pour le positionnement préféré des supports longitudinaux (3) sur les guides (2)
**caractérisé en ce que** les supports longitudinaux (3) sont mobiles à partir de deux côtés opposés permettant au couvercle (1) de s'ouvrir à partir des deux extrémités des premier et second guides (2).

2. Couvercle de contenant de volaille (1) selon la revendication 1, **caractérisé en ce que** les emplacements de maintien préférés (6) des guides sensiblement parallèles (2) sont définis avec un relief sur les guides (2).

3. Couvercle de contenant de volaille (1) selon la revendication 1 ou 2,
**caractérisé en ce que** les emplacements de maintien préférés (6) des guides sensiblement parallèles (2) sont définis avec une force magnétique.

4. Couvercle de contenant de volaille (1) selon l'une des revendications précédentes, **caractérisé en ce que** la feuille de couverture flexible (5) est munie d'ouvertures (25).

5. Couvercle de contenant de volaille (1) selon l'une des revendications précédentes, **caractérisé en ce que** la feuille de couverture flexible (5) est un filet.

6. Couvercle de contenant de volaille (1) selon l'une des revendications précédentes, **caractérisé en ce qu'**au moins un support longitudinal (3) est relié de manière fixe aux guides (2).

7. Couvercle de contenant de volaille (1) selon l'une des revendications précédentes, **caractérisé en ce que** des guides (2) sont munis de raccords pour connecter les guides (2) sur un contenant de volaille (30).

8. Contenant de volaille (30) pour contenir de la volaille vivante, comprenant : une paroi de fond, quatre parois latérales (32, 33, 34, 35) faisant saillie de la paroi de fond (31) et un couvercle (1) pour un contenant de volaille (30) selon l'une des revendications précédentes, lequel couvercle de contenant de volaille (1) est relié aux parois latérales (32, 33, 34, 35) à distance de la paroi de fond (31).

9. Contenant de volaille (30) pour contenir des volailles vivantes selon la revendication 8, **caractérisé en ce que** les emplacements de maintien préférés (6) sont situés sur les guides parallèles (2) au moins sur des positions adjacentes à deux parois latérales opposées (32, 33, 34, 35) du contenant de volaille (30) et à une ou plusieurs positions centrales entre deux parois opposées (32, 33, 34, 35).

10. Contenant de volaille (30) pour contenir de la volaille vivante selon la revendication 8 ou 9, **caractérisé en ce que** le contenant de volaille (30) est pourvu d'une porte (36), laquelle porte (36) est formée par une section de l'une des parois latérales (35) et une section, avec la section de paroi latérale connectée, de la paroi de fond, laquelle porte (36) est connectée de manière mobile au reste du contenant de volaille (30) de telle sorte que la porte (36) est déplaçable entre une position dans laquelle la porte (36) s'adapte au reste du contenant de volaille (30) et une position dans laquelle la porte (36) laisse une ouverture dans la paroi latérale (35) et le fond (31) pour le passage de la volaille.

11. Contenant de volaille (30) selon l'une quelconque des revendications 8 à 10, **caractérisé en ce que** la porte (36) est située au centre de la paroi latérale (35) dans laquelle la porte (36) est installée.

12. Contenant de volaille (30) selon l'une quelconque des revendications 8 à 11, **caractérisé en ce que** la porte (36) est reliée de manière coulissante au reste de la paroi de fond (31).

13. Ensemble de contenant de volaille (40) pour contenir de la volaille vivante, comprenant plusieurs contenants de volaille empilés (42) comprenant un contenant de volaille (30) selon l'une quelconque des revendications 8 à 12 placé sur le dessus de la pile de contenants de volaille (42).

14. Ensemble de contenant de volaille (40) selon la revendication 13,
**caractérisé en ce que** l'ensemble de contenant de volaille (40) comprend une base de contenant de volaille (41).
